# EUROPÄISCHE PATENTANMELDUNG

(11) **EP 1 189 075 A2**
(43) Veröffentlichungstag der Anmeldung: **20.03.2002**
(21) Anmeldenummer: 01120949.1
(22) Anmeldetag: 31.08.2001
(51) Int. Cl.: G01T 1/11

(54) **Vorrichtung zur Codelesung für Thermolumineszenzdetektoren**

(30) Priorität: 14.09.2000 DE 10045477
(71) Anmelder: GSF-Forschungszentrum für Umwelt und Gesundheit GmbH, 85764 Oberschleissheim (DE)
(72) Erfinder: Brand, Hans-Norbert, 81241 München (DE); Figel, Markus, 80686 München (DE)

(57) **Zusammenfassung**

Die Erfindung betrifft eine Vorrichtung zur Codelesung für Thermolumineszenzdetektoren, wobei die Thermolumineszenzdetektoren in gleichem Anstand von einer Drehachse auf einem scheibenförmigen Rundmagazin angeordnet sind.

Es stellt die Aufgabe, eine Vorrichtung für die Codelesung- und Bestückung für die bei der Auswertung eingesetzten Magazine bereitzustellen.

Gelöst wird diese Aufgabe durch ein Antriebsmodul für das Magazin und eine optische Einheit, die eine Lichtschranke zum Initialisieren der Grundposition des Magazins, eine Lichtquelle zum homogenen Durchleuchten der Thermolumineszenzdetektoren und eine CCD-Kamera enthält.

## Beschreibung

Vorrichtung zur Codelesung für Thermolumineszenzdetektoren, wobei die Thermolumineszenzdetektoren in gleichem Anstand von einer Drehachse auf einem scheibenförmigen Rundmagazin angeordnet sind.

Beim amtlichen Fingerringdosimetersystem werden Dosimetersonden, wie sie aus der DE 196 43 317.7 mit beschrifteten TL-Detektoren nach DE 196 43 316.9 bekannt sind, eingesetzt. Die auf den Detektoren (3,1 x 3,1 x 1 mm³ oder ^{Ø}3,9 x 1 mm³) aufgebrachte Identifizierungsnummer im omnidirektionalen Code muß für die Zuordnung des individuellen Kalibrierfaktors jedes einzelnen Detektors für die Dosisermittlung gelesen werden. Dies geschieht mit am Markt erhältlichen Bauteilen wie Videokamera mit Stativ und Dekoder, wobei jeder Detektor manuell in die Leseposition gebracht werden muß. Zur rationellen Auswertung in entsprechenden Messautomaten werden die Detektoren in Rundmagazine eingelegt. Bei während der Überwachungsperiode von einem Monat verlorengegangenen Detektoren müssen aus bearbeitungstechnischen Gründen die entsprechenden Belegungsplätze auf dem Magazin frei bleiben, da die Auswertung nach Dosimeternummer erfolgt, ganz gleich, ob der jeweilige Detektor vorhanden ist oder nicht. Dies bedeutet für das Bedienpersonal hohe Konzentration und Aufmerksamkeit. Die vorgenannte Leseanordnung bietet keinerlei Möglichkeit, eine Fehlpositionierung der Detektoren auf dem Magazin durch das Personal auszuschließen und besitzt überdies den Nachteil, dass in einer offenen Anordnung der Kamera Fremdlichteinwirkungen auf das Betrachtungsfeld Kontrastveränderungen der Codeabbildung zur Folge haben, welche die Lesesicherheit nachhaltig verschlechtert. Entsprechende Einrichtungen, die diese Anforderungen erfüllen, sind am Markt nicht erhältlich.

Es stellt sich daher die Aufgabe, eine Vorrichtung der eingangs genannten Art für die bei der Auswertung eingesetzten Magazine bereitzustellen.

Gelöst wird diese Aufgabe durch die Merkmale des Patentanspruchs 1. Die Unteransprüche beschreiben vorteilhafte Ausgestaltungen der Erfindung.

Ein besonderer Vorteil der erfindungsgemäßen Vorrichtung besteht darin, dass sie bei geringer geometrischer Baugröße optimale Lesesicherheit unter Ausschluss von Fremdlichteinwirkungen bietet und gleichzeitig die sichere Zuweisung von Belegungsplätzen auf dem Magazin für das Bedienpersonal erlaubt. Außerdem ist die Steuerung durch einen PC leicht möglich.

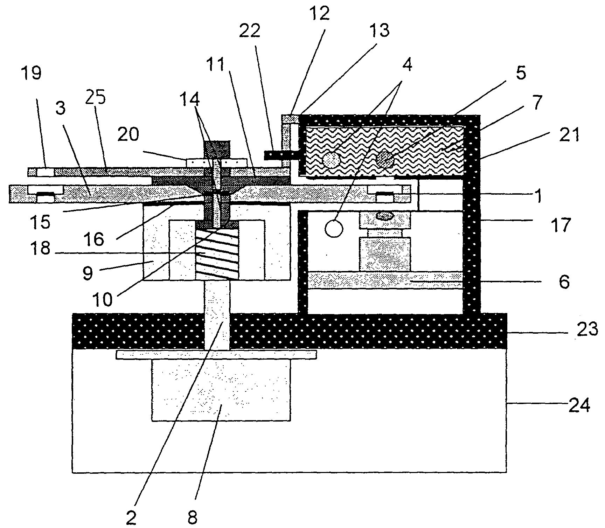

Die Erfindung wird im Folgenden anhand eines Ausführungsbeispiels mit Hilfe der Figur näher erläutert.

Dabei zeigt die Figur einen Schnitt durch eine beispielhafte Vorrichtung.

Die Vorrichtung zur Codelesung die die Figur zeigt besteht aus dem Chassis 23 dem Interfacegehäuse 24 und dem seitlich geschlitzten Gehäuse 17 als tragende Bauteile, welche die übrigen Bauteile enthalten.

Auf der Drehachse 2 eines PC-gesteuerten Elektromotors 8 ist ein mit einer Antirutschfolie 16 belegter Transportteller 9 mit integrierter Magazinzentrier- und Verriegelungseinrichtung angebracht, wobei ein permanentmagnetischer Zentrierbolzen 10 federnd in das Zentrum des eingelegten Magazins 3 eingreift und im Zusammenwirken mit dem parallel zur Motorachse angebrachten seitlich geschlitzten Gehäuse 17, das die Leseoptik enthält und in das das Magazin 3 hinein ragt, eine zentrische Verriegelung des Magazins 3 bewirkt.

An der Oberkante des Gehäuses 17 ist eine hochklappbar angeordnete Teilabdeckung 25 des Magazins 3 angebracht, die das Zentrum des Magazins 3 überdeckt und bis an den Rand desselben reicht, um dort die Befüllungsposition 19 des Magazins 3.für das Bedienpersonal vorzugeben, wobei sich diese Teilabdeckung 25 im abgesenkten Zustand justierbar am Gehäuse 17 abstützt, so daß sich Magazin 3 und Abdeckung 25 nicht berühren.

Die wegklappbare Teilabdeckung 25 des Magazins 3 enthält innerhalb der zentrisch geometrischen Überdeckung desselben einen arretierten, frei drehbar gelagerten, kegelförmig geformten Permanentmagneten 14 mit einem Andruckteller 11 in Richtung des Magazins 3, der nach Absenkung auf das Magazin in dieses von oben eingreift und mit dem permanentmagnetischen Zentrierbolzen des Transporttellers 9 eine kraftschlüssige Verbindung mit der Transporteinrichtung bildet und damit eine werkzeuglose Spannvorrichtung für das aus Aluminium bestehende Magazin 9 realisiert, indem letzteres mittels des Andrucktellers 11 auf die Antirutschfolie 16 des Transporttellers 9 gedrückt wird.

Zwischen dem permanentmagnetischen Zentrierbolzen 10 des Transporttellers 9 und dem abgesenkten kegelförmig geformten Permanentmagneten mit Andruckteller 11 der Teilabdeckung 25 verbleibt bei eingelegtem Magazin 3 ein Luftspalt von etwa 0,5 mm, der einerseits Stärketoleranzen des Magazins 3 bei nahezu gleichem Anpressdruck desselben ausgleicht und andererseits ein ruckfreies Anheben der Teilabdeckung 25 bewirkt mit der Folge, dass hierbei kein Detektor aus dem Magazin 3 springen kann.

Die optischen Komponenten, eine im Makrobereich arbeitende Videokamera 6 mit Belichtungsautomatik, eine stabilisierte, der Kamerasensitivität angepasste LED-Durchlichtquelle 5 und eine Lichtschranke 4 zur Magazinpositionskontrolle, sind in einem oben und unten lichtdicht verschlossenen, fremdlichtabschirmenden zylinderförmigen Gehäuse 17 angeordnet, wobei das Magazin 3 in dieses hineinragt und das Zentrum des Zylinders geometrisch mit dem Zentrum der Detektorposition auf dem Magazin 3 übereinstimmt.

Die elektronisch geregelte und stabilisierte Durchlichtquelle 5 ist innerhalb des Gehäuses 17 in einem zylindrischen Streulichtkörper 7 angebracht, der nur im Bereich des erforderlichen Belichtungsfeldes lichtdurchlässig ist. Durch Mattschwärzung außerhalb dieses Bereichs werden Fremdlichteinwirkungen, die durch Reflexion äußerer Beleuchtungsveränderungen über den erforderlichen Hineinragungsbereich des Magazins in den die Optik enthaltenden Hohlzylinder den Bildkontrast nachhaltig beeinflussen können, weitgehend unterdrückt. Der Streulichtkörper sitzt passgenau in dem Gehäuse 17.

Die Vorrichtung kann über einen hier nicht dargestellten handelsüblichen PC gesteuertwerden, der mit den entsprechenden Hardwarekomponenten zur Motorsteuerung, Videobildanalyse und Codedekodierung ausgestattet ist,

Die beschriebene Vorrichtung ist bei individueller Anpassung der Komponenten auch in kommerziell erhältliche Messgeräte integrierbar.

### Bezugszeichnungsliste:

- 1: Thermolumineszenzdetektor
- 2: Drehachse
- 3: Magazin
- 4: Lichtschranke
- 5: Lichtquelle
- 6: CCD-Kamera
- 7: Streulichtkörper
- 8: Elektromotor
- 9: Transportteller
- 10: Zentrierbolzen
- 11: Andruckteller
- 12: Halterung
- 13: Gelenk
- 14: Magnet
- 15: Luftspalt
- 16: Antirutschfolie
- 17: Gehäuse
- 18: Feder
- 19: Befüllungsposition
- 20: Arretierung
- 21: Lichtreflexschutz
- 22: Anschlagbolzen
- 23: Chassis
- 24: Interfacegehäuse
- 25: Teilabdeckung

## Patentansprüche

1. Vorrichtung zur Codelesung für Thermolumineszenzdetektoren (1), wobei die Thermolumineszenzdetektoren (1) in gleichem Anstand von einer Drehachse auf einem scheibenförmigen Rundmagazin (3) angeordnet sind, bestehend aus einem schlupffreien Antriebsmodul für das Magazin (3) und einer optischen Einheit, die eine Lichtschranke (4) zum Initialisieren der Grundposition des Magazins (3), eine Lichtquelle (5) zum homogenen Durchleuchten der Thermolumineszenzdetektoren (1) und eine CCD-Kamera (6) enthält.

2. Vorrichtung nach Anspruch 1, **dadurch gekennzeichnet, dass** die Lichtquelle (5) eine Leuchtdiode in Verbindung mit einem Streulichtkörper (7) ist, wodurch ohne weitere optische Bauelemente eine homogene Ausleuchtung der Thermolumineszenzdetektoren (1) erreicht wird.

3. Vorrichtung nach Anspruch 1 oder 2, **dadurch gekennzeichnet, dass** die optische Einheit in einem seitlich geschlitzten, ansonsten lichtdichten Gehäuse (17) untergebracht ist, wobei das Magazin (3) in diesen Schlitz hineinragt und wobei die Drehachse des Magazins parallel zur optischen Achse der CCD-Kamera (6) verläuft.

4. Vorrichtung nach einem der Ansprüche 1 bis 3, **gekennzeichnet dadurch, dass** das Antriebsmodul aus einem Elektromotor (8), einem Transportteller (9), welcher mit der Achse des Elektromotors (8) verbunden ist und einer Klemmvorrichtung für das Magazin (3) besteht.

5. Vorrichtung nach einem der Ansprüche 1 bis 4, **gekennzeichnet dadurch, dass** die Klemmvorrichtung aus einem im Transportteller (9) federnd gelagerten Zentrierbolzen (10) und einem Andruckteller (11) besteht, wobei der Andruckteller (11) an einer Teilabdeckung (25) befestigt ist, der nach oben weggeklappt werden kann.

6. Vorrichtung nach einem der Ansprüche 1 bis 5, **gekennzeichnet dadurch, dass** der Andruckteller (11) in einer Halterung (12) axial und radial beweglich gelagert ist und dass die Teilabdeckung (25) mit Hilfe von Gelenken (13) am Gehäuse (17) befestigt ist

7. Vorrichtung nach einem der Ansprüche 1 bis 6, **gekennzeichnet dadurch, dass** Andruckteller (11) und Zentrierbolzen (10) in ihrem Zentrum Magneten (14) enthalten, welche die Klemmung des Magazins (3) bewirken.

8. Vorrichtung nach einem der Ansprüche 1 bis 7, **gekennzeichnet dadurch, dass** sich die Magneten (3) bei geschlossener Klemmvorrichtung bei minimalem Luftspalt nicht berühren.

9. Vorrichtung nach einem der Ansprüche 1 bis 8, **gekennzeichnet dadurch, dass** zur Verbesserung der Traktion der Transportteller (9) mit einer Antirutschfolie (16) versehen ist.
